# EUROPÄISCHE PATENTSCHRIFT

(11) **EP 1 968 827 B1**
(45) Veröffentlichungstag und Bekanntmachung des Hinweises auf die Patenterteilung: **04.03.2009**
(21) Anmeldenummer: 06819320.0
(22) Anmeldetag: 08.11.2006
(51) Int. Cl.: B60S 1/38

(54) **ANSCHLUSSELEMENT**
CONNECTING ELEMENT
ELEMENT DE RACCORDEMENT

(30) Priorität: 27.12.2005 DE 102005062463
(43) Veröffentlichungstag der Anmeldung: 17.09.2008
(73) Patentinhaber: ROBERT BOSCH GMBH, 70442 Stuttgart (DE)
(72) Erfinder: THOMAR, Wolfgang, 3300B Tienen (BE); JANSSIS, Yves, 3800 Sint-Truiden (BE); CRIEL, Paul, 3800 St. Truiden (BE); CRABBE, Rudi, 3350 Linter (Neerhespen) (BE); VAN BAELEN, David, 3020 Herent (BE)
(86) Internationale Anmeldenummer: PCT/EP2006/068210
(87) Internationale Veröffentlichungsnummer: WO 2007/073974

(56) Entgegenhaltungen:
- DE-A1- 19 860 644
- DE-U1-2202004 013 17

## Beschreibung

### Stand der Technik

Die Erfindung geht von einem Anschlusselement nach dem Oberbegriff des Anspruchs 1 aus.

Aus der DE 198 60 644 A1 ist ein Anschlusselement zum gelenkigen Verbinden eines Wischblatts mit einem Wischarm bekannt. Das Anschlusselement ist an dem Wischblatt befestigt, das eine Wischleiste mit zwei seitlichen Längsnuten besitzt. In diese sind als Tragelemente zwei Federschienen eingesetzt, die seitlich ein Stück weit aus der Wischleiste vorstehen. Das Anschlusselement, das aus Kunststoff gefertigt ist, besitzt zwei Führungsschienen mit einem u-förmigen Querschnittprofil, wobei die offenen Seiten der Führungsschienen einander zugewandt sind. Die Führungsschienen, die über einen Federbügel miteinander verbunden sind, werden in Längsrichtung auf die vorstehenden Teile der Federschienen aufgeschoben und verrasten in ihrer Endposition mit den Federschienen. Hierzu dienen Aussparungen in den Federschienen, die mit Rastnocken zusammenwirken, die an Federzungen der Führungsschienen angeordnet sind.

Das Anschlusselement besitzt Lagerelemente in Form von Lagerzapfen, die an den Außenseiten der Führungsschienen angeordnet sind. Zur Montage des Anschlusselements können die Führungsschienen auf Grund der Elastizität des Federbügels elastisch ein Stück zusammengedrückt werden, sodass die Lagerzapfen in entsprechende Lagerbohrungen eines Endstücks des Wischarms eingesetzt werden können. Das Endstück ist aus Metall, z.B. aus Blech gefertigt. Nach der Montage des Anschlusselements am Wischarm erfolgt die Montage am Wischblatt. In der Betriebsposition verriegeln die Seitenwände des Wischarms die Federzungen mit den Rastnocken, sodass ein unbeabsichtigtes Lösen oder Verschieben des Anschlusselements vermieden wird. Der Federbügel erstreckt sich quer zur Längsrichtung der Führungsschienen und bildet somit einen Freiraum, um das Anschlusselement gegebenenfalls über ein Spoilerprofil des Wischblatts schieben zu können.

### Vorteile der Erfindung

Nach der Erfindung ist das Anschlusselement aus einem Sicherungsteil aus Kunststoff und einem Lagerteil aus Metall zusammengesetzt. Dabei kann das Sicherungsteil mit seinen Führungsschienen die Federschiene bzw. die Federschienen seitlich umfassen. Zur seitlichen Führung weist das Lagerteil an seinen Enden seitliche Führungswinkel auf, die an einem Boden des Lagerteils angeformt sind. Sie bilden bei auftretenden Momenten um eine Hochachse eine große Abstützbasis, wodurch eine gute seitliche Führung des Wischblatts gewährleistet ist.

Die Führungswinkel weisen an ihren den Stirnwänden abgewandten Seiten Laschen auf, die um eine parallel zur Hochachse verlaufende Biegeachse nach innen gebogen werden können, wobei jeweils ein abgewinkelter Schenkel die Führungsschienen des Sicherungsteils untergreifen. Dadurch wird das Anschlusselement in Richtung der Hochachse durch das Lagerteil gesichert. Gleichzeitig ist das Lagerteil aus verschleißfestem, formstabilem Metall, z.B. Blech, und gegenüber den Federschienen aus Federstahl durch das Sicherungsteil aus Kunststoff isoliert, sodass Schwingungen gedämpft werden.und eine Korrosion vermieden wird. Durch das erfindungsgemäße Anschlusselement ergibt sich eine präzise, stabile und verschleißfeste Gelenkverbindung zwischen dem Wischarm und dem Wischblatt mit einer hervorragenden Seitenführung des Wischblatts.

In vorteilhafter Ausgestaltung besitzt das Sicherungsteil an seinen Enden Stirnwände, die insbesondere nach außen über die Konturen der Führungsschienen vorstehen. Der Federbügel verläuft in einer Ebene parallel zur Federschiene. Somit kann das Lagerteil, das das Sicherungsteil überdeckt, flach gehalten werden und zwischen den Stirnwänden des Sicherungsteils eingepasst sein, während es in Längsrichtung durch die Rastnocken an den Führungsschienen des Sicherungsteils gesichert ist. Anstatt dieser formschlüssigen Rastnockensicherung kann in eine weniger belasteten Ausführung, zum Beispiel bei kleinen Heckwischern, auch ein kraftschlüssiger Verbund vorgesehen sein.

Gemäß einer Ausgestaltung der Erfindung bilden die Stirnwände jeweils einen Spalt, der von jeweils einem Federbügel überbrückt wird. Somit weist die offene Seite des Federbügels zum Ende des Sicherungsteils hin, während der geschlossene Bogen des Federbügels zwischen den Führungsschienen liegt.

Das Lagerteil wird zweckmäßigerweise aus Blech geformt, wobei im mittleren Bereich seiner Längsseiten Seitenwände hoch gebogen sind, die mindestens ein Lagerelement tragen, z.B. eine Lagerbuchse oder einen Lagerzapfen oder andere geeignete Lagerelemente, wie sie nach dem Stand der Technik bekannt sind.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

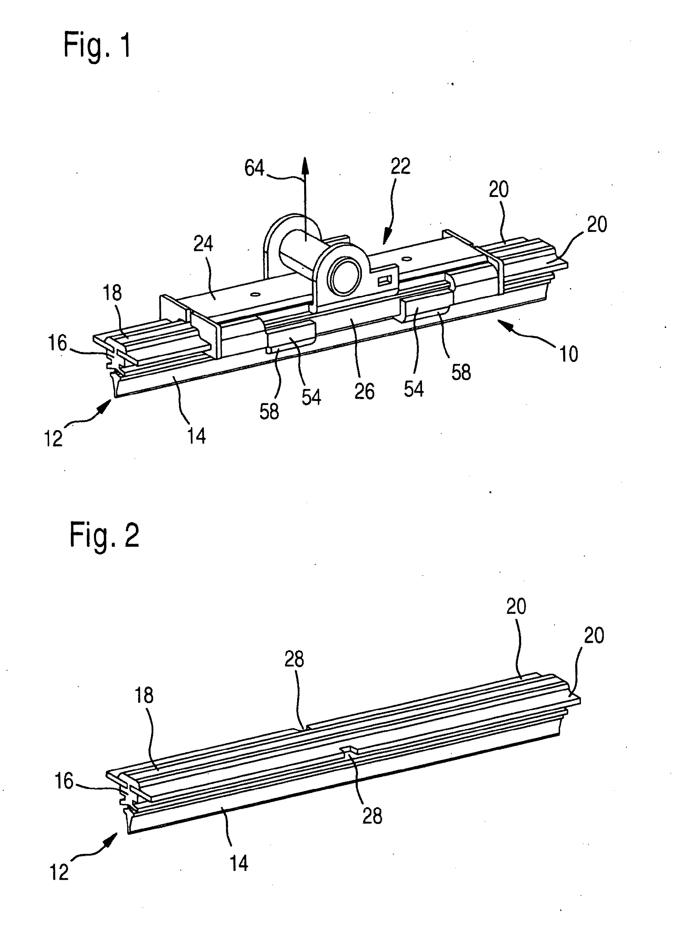

Fig. 1 eine perspektivische Ansicht eines erfindungsgemäßen Anschlusselements an einem Wischblatt von oben,
Fig. 2 eine perspektivische Ansicht einer Wischleiste mit eingesetzten Federschienen,
Fig. 3 eine perspektivische Ansicht eines Sicherungsteils,
Fig. 4 eine Ansicht eines Sicherungsteils in Richtung eines Pfeils IV in Fig. 3,
Fig. 5 einen Schnitt entsprechend der Linie V-V in Fig. 4,

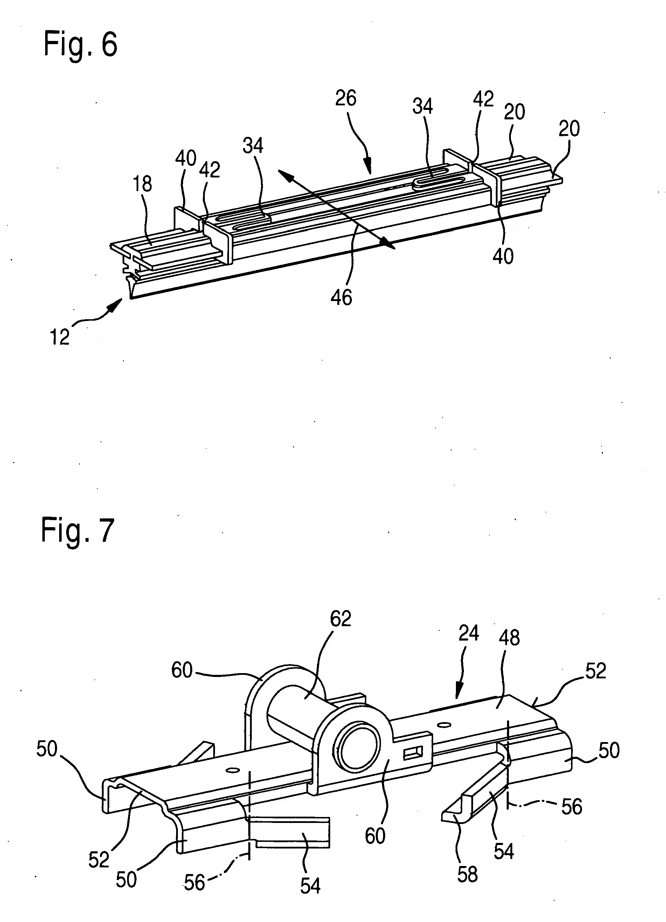

Fig. 6 eine perspektivische Ansicht eines montierten Sicherungsteils und
Fig. 7 eine perspektivische Ansicht eines Lagerteils.

### Beschreibung des Ausführungsbeispiels

Auf einem Wischblatt 10 ist ein Anschlusselement 22 montiert. Es besitzt ein Lagerteil 24 aus Metall, vorzugsweise aus Blech, und ein Sicherungsteil 26 aus Kunststoff. Das Wischblatt 10 umfasst eine Wischleiste 12 mit einer Wischlippe 14, einer Kopfleiste 16 und einer Rückenleiste 18. Zwischen der Rückenleiste 18 und der Kopfleiste 16 sind in zwei Längsnuten Federschienen 20 eingesetzt, die ein Stück weit aus den Nuten herausragen.

Für den Fall, dass das Wischblatt 10 nur eine Federschiene 20 in einem zentralen Längskanal besitzt, ist der Längskanal im Bereich des Anschlusselements 22 seitlich offen, sodass die Federschiene 20 zu beiden Seiten ein Stück weit frei liegt, sodass das Sicherungsteil 26 auf ihr befestigt werden kann.

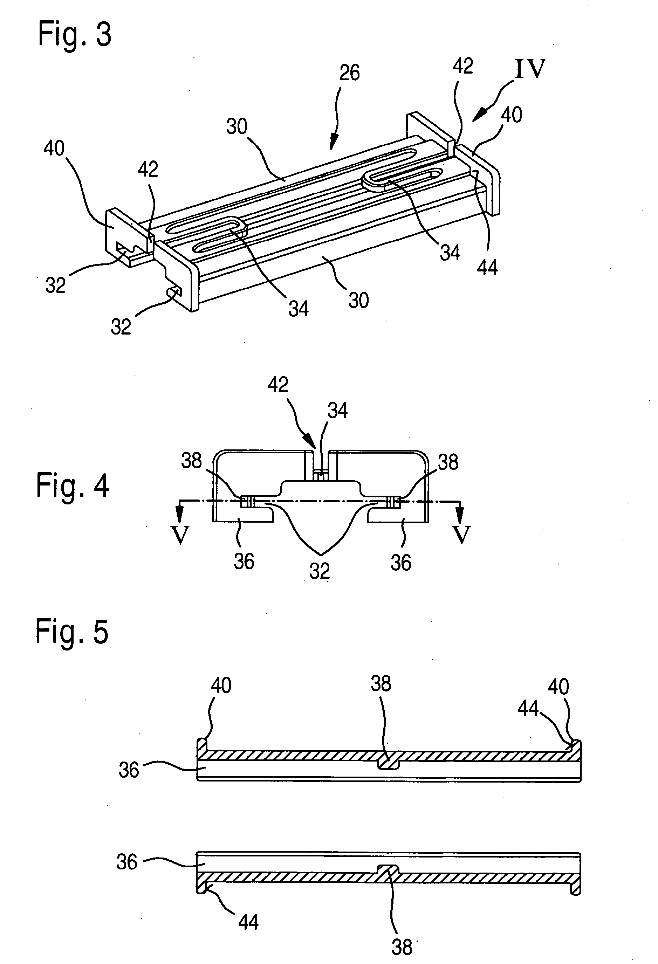

Das Befestigungsteil 26 (Fig. 3 bis Fig. 5) besitzt zwei Führungsschienen 30, die Führungsnuten 32 besitzen, in die die Federschienen 20 im montierten Zustand eingreifen. Die offenen Seiten der Führungsnuten 32 sind einander zugewandt. Sie werden von einer unteren Nutflanke 36 begrenzt, die an der Unterseite der Federschienen 20 anliegt.

Die Führungsschienen 30 sind durch Federbügel 34 miteinander verbunden. Diese liegen in einer Ebene parallel zu den Federschienen 20, sodass sich ein flacher Aufbau ergibt. An den Enden der Führungsschienen 30 sind Stirnwände 40 vorgesehen, die an jedem Ende einen Spalt 42 bilden, der von dem Federbügel 34 überbrückt wird. Die Stirnwände 40 stehen nach außen ein Stück weit über die Kontur der Führungsbügel vor und bilden Anlageflächen 44, die die axiale Fixierung des eingepassten Lagerteils 24 gewährleisten.

Die Führungsschienen 30 besitzen in den Führungsnuten 32 Rastnocken 38. Diese greifen im montierten Zustand in entsprechende Aussparungen 28 der Federschienen 20 ein und sichern somit die axiale Lage des Sicherungsteils 26 relativ zu den Federschienen 20. Zur Montage werden die Führungsschienen 30 quer zum Wischblatt 10 in Richtung des Pfeils 46 elastisch auseinander gezogen und auf die Federschienen 20 aufgesetzt, sodass diese in die Führungsnuten 32 eingreifen und die Rastnocken 38 der Führungsschienen 30 in die Aussparungen 28 der Federschienen 20 einrasten. Zum Verriegeln des Sicherungsteils 26 wird das Lagerteil 24 zwischen die Anlageflächen 44 der Stirnwände 40 eingepasst. Dabei wird das Lagerteil 24 seitlich durch Führungswinkel 50 an den Führungsschienen 30 des Sicherungsteils 26 geführt. Da die Führungswinkel 50 an den Enden des Lagerteils 24 an einem Boden 48 angeformt sind, ergibt sich für Biegemomente um eine Hochachse 64 eine große Abstützbasis, wodurch sich eine sehr gute seitliche Führung des Wischblatts 10 ergibt.

In Längsrichtung an den einander zugewandten Stirnseiten 52 der Führungswinkel 50 sind Laschen 54 angeformt, die um eine Biegeachse 56 bei der Montage nach innen gebogen werden. Dabei greift ein abgewinkelter Schenkel 58 der Lasche 54 unter die Führungsschiene 30 des Sicherungsteils 26, sodass das Lagerteil 24 in Richtung der Hochachse 64 gesichert ist. Ferner wird das Sicherungsteil 26 durch das Lagerteil 24 blockiert, sodass es sich nicht von den Federschienen 20 lösen oder darauf verschieben kann.

Das Lagerteil 24, das vorzugsweise aus Blech gefertigt ist, besitzt zwei nach oben gebogene Seitenwände 60, die als Lagerelement eine Lagerbuchse 62 für einen Lagerzapfen halten, der mit einem nicht dargestellten Wischarm verbunden ist. Anstelle der Lagerbuchse 62 kann das Lagerteil 24 andere Lagerelemente wie z.B. Lagerbolzen, Lagerzapfen, Lagerwalzen oder dgl. aufweisen, wie sie aus dem Stand der Technik bekannt sind.

## Patentansprüche

1. Anschlusselement (22) zum gelenkigen Verbinden eines Wischarms mit einem Wischblatt (10), das eine Wischleiste (12) und mindestens eine Federschiene (20) aufweist, die von Führungsschienen (30) des Anschlusselements (22) umfasst ist, die durch mindestens einen Federbügel (34) miteinander verbunden sind, wobei die Führungsschienen (30) und der Federbügel (34) aus Kunststoff gefertigt sind, **dadurch gekennzeichnet, dass** es aus einem Sicherungsteil (26) aus Kunststoff und einem Lagerteil (24) aus Metall zusammengesetzt ist, wobei das Sicherungsteil (26) mit seinen Führungsschienen (30) die Federschiene (20) seitlich umfassen kann, dass der Federbügel (34) in einer Ebene parallel zur Federschiene (20) verläuft, dass das Lagerteil (24) das Sicherungsteil (26) überdeckt und seitliche Führungswinkel (50) aufweist, die an einem Boden (48) des Lagerteils (24) angeformt sind und Laschen (54) aufweisen, die um eine parallel zu einer Hochachse (64) verlaufende Biegeachse (56) nach innen gebogen werden können, wobei jeweils ein abgewinkelter Schenkel (58) die Führungsschienen (30) des Sicherungsteils (26) untergreift.

2. Anschlusselement nach Anspruch 1, **dadurch gekennzeichnet, dass** die Federschiene (20) und das Sicherungsteil (26) zueinander über einen in eine Aussparung (28) greifenden Rastnocken (38) gesichert sind, dass das Sicherungsteil (26) an seinen Enden Stirnwände (40) besitzt, die über die Konturen der Führungsschienen (30) vorstehen, und dass das Lagerteil zwischen den Stirnwänden (40) eingepasst ist.

3. Anschlusselement (22) nach Anspruch 2, **dadurch gekennzeichnet, dass** die Stirnwände (40) jeweils einen Spalt (42) bilden, der von jeweils einem Federbügel (34) überbrückt wird.

4. Anschlusselement (22) nach einem der Ansprüche 1 bis 3, **dadurch gekennzeichnet, dass** das Lagerteil (24) aus Blech geformt ist, wobei im mittleren Bereich seiner Längsseiten Seitenwände (60) hoch gebogen sind, die mindestens ein Lagerelement (62) tragen.

## Claims

1. Connecting element (22) for the articulated connection of a wiper arm to a wiper blade (10) which has a wiper strip (12) and at least one spring rail (20) enclosed by guide rails (30) of the connecting element (22), which guide rails are connected to each other by at least one spring clip (34), wherein the guide rails (30) and the spring clip (34) are manufactured from plastic, **characterized in that** said connecting element is composed of a plastic securing part (26) and a metal bearing part (24), with it being possible for the securing part (26), by means of its guide rails (30), to laterally enclose the spring rail (20), **in that** the spring clip (34) runs in a plane parallel to the spring rail (20), **in that** the bearing part (24) covers the securing part (26) and has lateral angled guides (50) which are integrally formed on a base (48) of the bearing part (24) and have tabs (54) which can be bent inwards about a bending axis (56) running parallel to a vertical axis (64), with a respective angled limb (58) engaging under the guide rails (30) of the securing part (26).

2. Connecting element according to Claim 1, **characterized in that** the spring rail (20) and the securing part (26) are secured with respect to each other via a latching cam (38) which engages in a cutout (28), **in that** the ends of the securing part (26) have end walls (40) which project over the contours of the guide rails (30), and **in that** the bearing part is fitted between the end walls (40).

3. Connecting element (22) according to Claim 2, **characterized in that** the end walls (40) each form a gap (42) which is spanned by a respective spring clip (34).

4. Connecting element (22) according to one of Claims 1 to 3, **characterized in that** the bearing part (24) is formed from sheet metal, with side walls (60) which support at least one bearing element (62) being bent upwards in the central region of the longitudinal sides of said bearing part.

## Revendications

1. Elément de raccordement (22) pour la connexion articulée d'un bras de lavage à un balai d'essuie-glace (10) qui présente une raclette (12) et au moins un rail élastique (20) qui est saisi par des rails de guidage (30) de l'élément de raccordement (22), qui sont connectés l'un à l'autre par au moins un étrier élastique (34), les rails de guidage (30) et l'étrier élastique (34) étant fabriqués en plastique, **caractérisé en ce qu'**il se compose d'une pièce de fixation (26) en plastique et d'une pièce de palier (24) en métal, la pièce de fixation (26) pouvant saisir latéralement le rail élastique (20) avec ses rails de guidage (30), **en ce que** l'étrier élastique (34) s'étend dans un plan parallèlement au rail élastique (20), **en ce que** la partie de palier (24) recouvre la partie de fixation (26) et présente des coins de guidage latéraux (50) qui sont façonnés sur un fond (48) de la partie de palier (24) et qui présentent des pattes (54), qui peuvent être cintrées vers l'intérieur autour d'un axe de flexion (56) s'étendant parallèlement à un axe vertical (64), une branche coudée (58) venant à chaque fois en prise par le dessous avec les rails de guidage (30) de la partie de fixation (26).

2. Elément de raccordement selon la revendication 1, **caractérisé en ce que** le rail élastique (20) et la partie de fixation (26) sont fixés l'un par rapport à l'autre par le biais d'une came d'encliquetage (38) venant en prise dans un évidement (28), **en ce que** la partie de fixation (26) possède à ses extrémités des parois frontales (40) qui dépassent au-delà des contours des rails de guidage (30) et **en ce que** la partie de palier est adaptée entre les parois frontales (40).

3. Elément de raccordement (22) selon la revendication 2, **caractérisé en ce que** les parois frontales (40) forment à chaque fois une fente (42) qui est surmontée à chaque fois par un étrier élastique (34).

4. Elément de raccordement (22) selon l'une quelconque des revendications 1 à 3, **caractérisé en ce que** la partie de palier (24) est formée en tôle, et dans la région centrale de ses côtés longitudinaux, des parois latérales (60) sont recourbées vers le haut et portent au moins un élément de palier (62).
